# EUROPEAN PATENT SPECIFICATION

(11) **EP 3 451 162 B1**
(45) Date of publication and mention of the grant of the patent: **29.12.2021**
(21) Application number: 16899900.1
(22) Date of filing: 05.05.2016
(51) Int. Cl.: G06F 9/30, G06F 9/38

(54) **DEVICE AND METHOD FOR USE IN EXECUTING MATRIX MULTIPLICATION OPERATIONS**
VORRICHTUNG UND VERFAHREN ZUR VERWENDUNG BEI DER AUSFÜHRUNG VON MATRIXMULTIPLIKATIONSOPERATIONEN
DISPOSITIF ET PROCÉDÉ SERVANT À EXÉCUTER DES OPÉRATIONS DE MULTIPLICATION DE MATRICES

(30) Priority: 26.04.2016 CN 201610266627
(43) Date of publication of application: 06.03.2019
(73) Proprietor: Cambricon Technologies Corporation Limited, Beijing 100190 (CN)
(72) Inventor: ZHANG, Xiao, Beijing 100190 (CN); LIU, Shaoli, Beijing 100190 (CN); CHEN, Tianshi, Beijing 100190 (CN); CHEN, Yunji, Beijing 100190 (CN)
(74) Representative: AWA Sweden AB
(86) International application number: PCT/CN2016/081067
(87) International publication number: WO 2017/185389

(56) References cited:
- CN-A- 1 842 779
- CN-A- 102 214 160
- CN-A- 103 929 199
- CN-A- 105 117 372
- US-A1- 2011 055 517
- US-B2- 6 898 691
- MOSTAFA I SOLIMAN ED - ANONYMOUS: "Mat-core: A matrix core extension for general-purpose processors", COMPUTER ENGINEERING&SYSTEMS, 2007. ICCES '07. INTERNATIONAL CONFERENCE ON, IEEE, PI, 1 November 2007 (2007-11-01), pages 304-310, XP031212365, ISBN: 978-1-4244-1365-2
- SHAOLI LIU ET AL: "Cambricon", ACM SIGARCH COMPUTER ARCHITECTURE NEWS, ACM SPECIAL INTEREST GROUP ON COMPUTER ARCHITECTURE, 2 PENN PLAZA, SUITE 701 NEW YORK NY 10121-0701 USA, vol. 44, no. 3, 18 June 2016 (2016-06-18), pages 393-405, XP058300636, ISSN: 0163-5964, DOI: 10.1145/3007787.3001179

## Description

### TECHNICAL FIELD

The present disclosure relates to the field of computers, and more particularly to a device and method for executing a matrix multiplication operation.

### BACKGROUND

In the current computer field, along with the maturity of emerging technologies such as big data and machine learning, more and more tasks include various matrix multiplication operations, especially multiplication operations of large matrices, which often become a bottleneck of improving algorithm speed and effect. For example, the current popular deep learning contains a large number of matrix multiplication operations. In the fully-connected layer of artificial neural network of deep learning, the operation expression of output neuron is *y = f* (*wx* + *b*)*,* in which case that w represents a weight matrix, x represents an inputting vector, b represents an offset vector, and the outputting matrix is calculated. The process of computing the outputting matrix y is to multiply the matrix w by the matrix x, add the product to the matrix b, and then perform an activation function operation on the obtained matrix (i.e. to perform an activation function operation on each element in the matrix). In this process, the matrix-multiplying-vector operation is much more complicated than subsequent biasing and activation operation. Efficient implementation of the matrix-multiplying-vector operation has the most important impact on the entire operation process. Thus, efficient implementation of matrix multiplication operation is an effective way to improve many computer algorithms.

In the prior art, one solution to conduct matrix multiplication operation is to use a general-purpose processor by executing a general instruction via general-purpose register file and general-purpose functional unit to perform matrix multiplication operations. However, one defect of the solution is the low operation performance during matrix operation triggered because a single general-purpose processor is primarily used for scalar computation. On the other hand, when using multiple general-purpose processors for concurrent execution, the effect is not enough when the number of the general-purpose processors is not increased largely, and large numbers of the general-purpose processors may lead to a possible performance bottleneck resulting from the intercommunication among such processors.

In another prior art, matrix multiplication computation is conducted by using graphics processing unit (GPU). General-purpose register file and general-purpose stream processing unit are used to execute general SIMD instructions, thereby performing matrix operation. Nonetheless, in the above-mentioned solution, On-chip small cache of GPU requires a constant transportation of off-chip data in performing large-scale matrix operations, which makes off-chip bandwidth a main performance bottleneck.

In another prior art, a specialized matrix operation device is used to perform matrix multiplication computation. Customized register file and processing unit are used to perform matrix operation. Limited by the register file, however, the present specialized matrix operation device is unable to flexibly support matrix operations of different lengths.

In the prior art, clearly, either the multi-core general processor on chip, or the inter-chip interconnected general processor (single or multi core), or inter-chip interconnected graphics processor is unable to perform an efficient matrix multiplication operation. Also, the current solutions, in performing matrix multiplication operations, are burdened with excessive codes, limited inter-chip communication, insufficient on-chip cache, and inflexible matrix size.

Mostafa I Soliman "Mat-core: A matrix core extension for general-purpose processors", Computer Engineering&Systems, 2007 ICCES 07 discloses a matrix unit for performing matrix/vector instructions.

### SUMMARY

Based on this, the present disclosure provides a device and method for executing a matrix multiplication operation.

According to an aspect of the present disclosure, there is provided a device for executing a matrix multiplication operation. The device for executing a matrix multiplication operation includes: a storage unit, a register unit, a controlling unit, and a matrix operation unit.

The storage unit is configured to store matrix data associated with a matrix operation instruction;

The register unit is configured to store scalar data associated with the matrix operation instruction.

The controlling unit is configured to decode the matrix operation instruction and control the operation process of the matrix operation instruction; and

The matrix operation unit is configured to perform a matrix multiplication operation on an inputting matrix according to the decoded matrix operation instruction. The matrix operation unit is a customized hardware circuit.

According to another aspect of the present disclosure, there is provided a device for executing a matrix multiplication operation. The device for executing a matrix multiplication operation includes an instruction fetching unit, a decoding unit, an instruction queue unit, a scalar register file, a dependency relationship processing unit, a storage queue unit, a matrix operation unit, a Scratchpad Memory, and an input-and-output access unit.

The instruction fetching unit is configured to fetch a matrix operation instruction to be executed next time from an instruction sequence, and transmit the matrix operation instruction to a decoding unit.

The decoding unit is configured to decode the matrix operation instruction, and transmit the decoded matrix operation instruction to an instruction queue unit.

The instruction queue unit is configured to temporarily store the decoded matrix operation instruction, obtain scalar data associated with the operation of the matrix operation instruction from the matrix operation instruction or a scalar register file; to send the matrix operation instruction to a dependency relationship processing unit after obtaining the scalar data;

The scalar register file includes multiple scalar registers, configured to store the scalar data associated with the matrix operation instruction;

The dependency relationship processing unit is configured to determine whether the matrix operation instruction has a dependency on a previous uncompleted matrix operation instruction; to send the matrix operation instruction to a storage queue unit if the matrix operation instruction has a dependency on the previous uncompleted matrix operation instruction; to send the matrix operation instruction to a matrix operation unit if the matrix operation instruction does not have a dependency on the previous uncompleted matrix operation instruction.

The storage queue unit is configured to store the matrix operation instruction having a dependency on the previous operation instruction and send the matrix operation instruction to the matrix operation unit after the dependency is eliminated.

The matrix operation unit is configured to perform a matrix multiplication operation on an inputting matrix according to the received matrix operation instruction;

The Scratchpad Memory is configured to store an inputting matrix and an outputting matrix.

The input-and-output access unit is configured to access the Scratchpad Memory directly, and be responsible for reading the outputting matrix from the Scratchpad Memory and writing the inputting matrix into the Scratchpad Memory.

The present disclosure also provides methods of performing multiplication operation between a matrix and a vector or a scalar.

The disclosure can be applied to the following (including but not limited to) scenarios: data processing, robots, computers, printers, scanners, telephones, tablets, smart terminals, mobile phones, drive recorders, navigators, sensors, cameras, cloud servers , cameras, camcorders, projectors, watches, earphones, mobile storage, wearable devices and other electronic products; aircrafts, ships, vehicles and other vehicles; TV, air conditionings, microwave ovens, refrigerators, rice cookers, humidifiers, washing machines, electric lights, gas stoves, range hoods and other household appliances; and various types of medical equipment including nuclear magnetic resonance instruments, B-ultrasounds, electrocardiographs.

### BRIEF DESCRIPTION OF THE DRAWINGS

FIG. 1 is a schematic structure diagram illustrating a device for executing a matrix multiplication operation according to an embodiment of the present disclosure.
FIG. 2 is a schematic diagram of the operation of a matrix operation unit according to an embodiment of the present disclosure.
FIG. 3 is a schematic diagram illustrating a format of an instruction set according to an embodiment of the present disclosure.
FIG. 4 is a schematic structural diagram illustrating a device for executing a matrix multiplication operation according to an embodiment of the present disclosure.
FIG. 5 is a schematic flow chart illustrating a device for executing a matrix multiplication operation executing a matrix-multiplying-vector instruction according to an embodiment of the present disclosure.
FIG. 6 is a schematic flow chart illustrating a device for executing a matrix multiplication operation executing a matrix multiplication scalar instruction according to an embodiment of the present disclosure.

### DETAILED DESCRIPTION

Aims, technical solutions, and advantages of the present disclosure will be described more clearly with reference to the specific embodiments of the disclosure and the accompanying drawings.

The present disclosure provides a device for executing a matrix multiplication operation. The device for executing a matrix multiplication operation includes a storage unit, a register unit, a controlling unit, and a matrix operation unit.

The storage unit is configured to store a matrix.

The register unit is configured to store a vector address, a vector length, a matrix address, a matrix length, and other scalar data required in the calculation process.

The controlling unit is configured to decode a matrix operation instruction, and control each unit according to the matrix operation instruction to control the execution process of a matrix multiplication operation.

The matrix operation unit is configured to acquire a vector address, a vector length, a matrix address, a matrix length, and other scalar data required in the calculation process from an instruction or the register unit, and then acquire a corresponding matrix in the storage unit according to an inputting matrix address, and then perform a matrix multiplication operation according to the acquired matrix to obtain an operation result.

The matrix data participating in the calculation is temporarily stored on the storage unit (for example, a Scratchpad Memory) according to the disclosure, so that data of different widths can be supported more flexibly and effectively in the matrix operation process, and the execution performance of the task including a large number of matrix multiplication operations can be improved.

In the present disclosure, the matrix operation unit can be implemented as a customized hardware circuit (for example, including but being not limited to a field-programmable gate array (FPGA), a coarse grained reconfigurable architecture (CGRA), an application specific integrated circuit (ASIC), an analog circuit, a memristor, etc.).

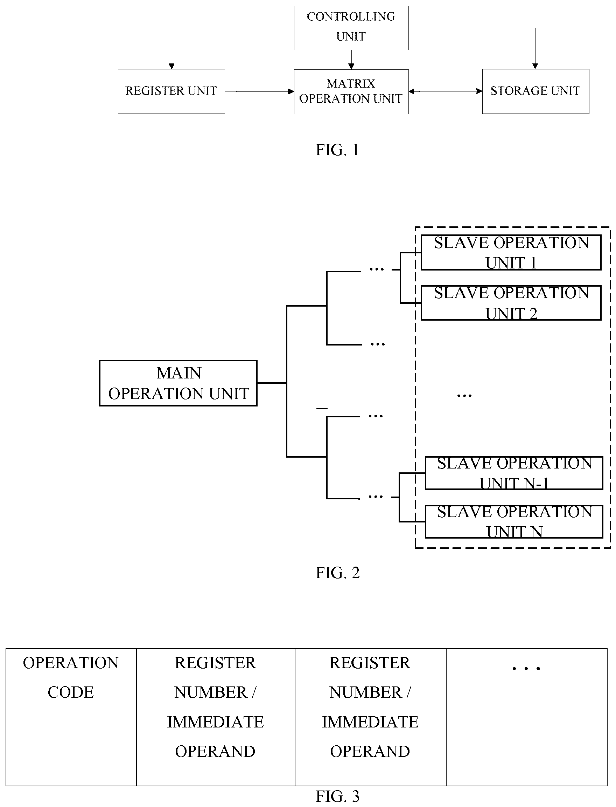

FIG. 1 is a schematic structure diagram illustrating a device for executing a matrix multiplication operation according to an embodiment of the present disclosure. As illustrated in FIG. 1, the device includes a storage unit, a register unit, a controlling unit, and a matrix operation unit.

The storage unit is configured to store matrices. In one embodiment, the storage unit can be a Scratchpad Memory capable of supporting matrix data of different sizes; in the subject disclosure, the necessary computational data are temporarily stored in the Scratchpad Memory to enable the computing device to more flexibly and effectively support data of different widths during matrix operations. The storage unit can be realized by various storage devices (such as static random access memory (SRAM), enhanced dynamic random access memory (eDRAM), dynamic random access memory (DRAM), memristor, 3D-DRAM or nonvolatile storage, etc.).

The register unit is configured to store matrix addresses. The matrix addresses are the ones where the matrices are stored in the storage unit. In one embodiment, the register unit can be a scalar register file providing a scalar register required during operations. The scalar register is configured to store an inputting matrix address, inputting matrix length, and an outputting matrix address. When operations between matrix and scalar are involved, the matrix operations unit is not only to acquire a matrix address from the register unit, but also to obtain a corresponding scalar from the register unit.

The controlling unit is configured to control behaviors of various units in the device. In one embodiment, the controlling unit is configured to read prepared instructions, decode the instructions to generate a control signal, and transmit the control signal to other units in the device, so that the other units can perform corresponding operations according to the obtained control signal.

The matrix operation unit is configured to acquire various matrix multiplication operation instructions, acquire a matrix address from the register unit according to the instruction, acquire a corresponding matrix in the storage unit according to the matrix address, and then perform an operation according to the acquired matrix to obtain a result of the matrix operation, and store the result of the matrix operation in the storage unit. The matrix operation unit is responsible for all matrix multiplication operations of the device, including but not limited to matrix- multiplying-vector operations, vector-multiplying-matrix operations, matrix multiplication operations, and matrix-multiplying-scalar operations. The matrix multiplication instruction is sent to the matrix operation unit.

FIG. 2 is a schematic diagram of the operation of a matrix operation unit according to an embodiment of the present disclosure. As illustrated in the FIG. 2, the matrix operation unit includes a main operation unit and multiple slave operation units. Each of the slave operation units can be configured to implement a vector dot product operation, and the vector dot product operation includes a contrapuntal multiplication of two vectors and a summation of the multiplication results. Each slave operation unit includes three parts, which are a vector contrapuntal multiplication unit, an addition tree unit, and an accumulation unit in sequence. The contrapuntal multiplication unit is configured to perform a contrapuntal multiplication of the two vectors. The addition tree unit is configured to add result vectors of the contrapuntal multiplication to obtain a number. The accumulation unit is configured to accumulate results of the addition tree unit.

In the process of multiplication operation of two matrices A and B, data of the matrix B is sequentially stored in each slave operation unit in columns, the first column is stored in a first slave operation unit, the second column is stored in a second slave operation unit, ..., the *(N+1)^{th}* column is stored in the *(N+1)^{th}* slave operation unit, and so on; data of the matrix A is stored in the main operation unit; in the calculation process, the main operation unit takes out one row of data of A each time, and broadcasts it to all the slave operation units; each slave operation unit completes dot product operation of row data of the matrix A and the column data stored by itself and returns a result to the main operation unit, the main operation unit obtains all data returned from the slave operation units, and finally obtains a row of a result matrix.

As for a specific calculation process of each slave operation unit, the slave operation unit extracts a part of the two vectors each time, the width of the extraction is equal to calculation-bit-width of the slave operation unit, which is the number of contrapuntal multiplications that can be simultaneously performed by the contrapuntal multiplication unit of the slave operation unit; a result of the part of the two vectors after the contrapuntal multiplication is sent to the addition tree unit to obtain a value, and the value is temporarily stored in the accumulation unit; when a result of the addition tree of next section of vectors is sent to the accumulation unit, the result is added to the value, and the vector inner product operation is completed by the method of the segmentation operation.

The matrix-multiplying-scalar operation is performed in the main operation unit, that is, the main operation unit also has a same contrapuntal multiplication unit, one input is from the matrix data, and the other input is from the vector expanded by the scalar.

The contrapuntal multiplication unit described above is multiple parallel scalar multiplying units. The multiplying units simultaneously read data in different locations in the vector and compute corresponding products.

According to an embodiment of the present disclosure, the device for executing a matrix multiplication operation further includes an instruction cache unit. The instruction cache unit is configured to store a matrix operation instruction to be executed. During the execution of the instruction, the instruction is also buffered in the instruction cache unit. When an instruction is executed, the instruction will be submitted.

According to an embodiment of the present disclosure, the controlling unit of the device further includes an instruction queue unit. The instruction queue unit is configured to store sequentially the decoded matrix operation instructions, and send the matrix operation instruction and scalar data to a dependency processing unit, after obtaining the scalar data required for the matrix operation instruction.

According to an embodiment of the present disclosure, the controlling unit of the device further includes a dependency relationship processing unit. The dependency relationship processing unit is configured to determine whether the operation instruction has a dependency on a previous uncompleted matrix operation instruction before the matrix operation unit acquires the instruction. For example, the dependency relationship processing unit is configured to determine whether the operation instruction and the previous uncompleted matrix operation instruction access to the same matrix storage address. If yes, the operation instruction is sent to the storage queue unit, and after the previous operation instruction is completed, the operation instruction in the storage queue is sent to the matrix operation unit; otherwise, the operation instruction is directly sent to the matrix operation unit. Specifically, when the matrix operation instruction needs to access the Scratchpad Memory, the previous and current (successive) instructions may access the same block of storage space. In order to ensure the correctness of the instruction execution result, when it is detected that the current instruction has a dependency on the data of the previous instruction, the instruction will wait in the storage queue until the dependency is eliminated.

According to an embodiment of the present disclosure, the controlling unit of the device further includes a storage queue unit. The unit includes an ordered queue. The instruction having a dependency on the data of the previous instruction is stored in the ordered queue until the dependency is eliminated. After the dependency is eliminated, the operation instruction is sent to the matrix operation unit.

According to an embodiment of the present disclosure, the device further includes an input-and-output unit. The input-and-output unit is configured to store the matrix in the storage unit or acquire an operation result from the storage unit. The input-and-output unit can directly access the storage unit, and is responsible for reading the matrix data from the memory to the storage unit or writing the matrix data from the storage unit to the memory.

During the execution of the matrix operation by the device, the device fetches the instruction for decoding, and then sends the decoded instruction to the instruction queue unit for storage. According to the decoding result, each parameter in the instruction is obtained. The parameters can be directly written in the operation field of the instruction, or can be read from the specified register according to the register number in the instruction operation field. The advantage of storing parameters by using register is that only the value of the register needs to be changed by the instruction instead of changing the instruction itself, which makes it possible to realize most of the loops and greatly save the number of instructions required to solve some practical problems. After all operands, the dependency relationship processing unit determines whether the data actually needed by the instruction has a dependency on data of the previous instruction, which determines whether the instruction can be immediately sent to the matrix operation unit for execution. Once it is detected that the data actually needed by the instruction has a dependency on data of the previous instruction, the instruction will wait until the instruction it depends on has been executed before the instruction can be sent to the matrix operation unit for execution. In the customized matrix operation unit, the instruction will be executed quickly, and the result, that is, the generated result matrix, is written back to the address provided by the instruction, and then the instruction is completed.

FIG. 3 is a schematic diagram illustrating a format of an instruction set according to an embodiment of the present disclosure. As illustrated in FIG. 3, the matrix multiplication operation instruction includes an operation code and at least one operation field. The operation code is configured to indicate a function of the matrix operation instruction. The matrix operation unit can perform different matrix operations by identifying the operation code. The operation field is configured to indicate data information of the matrix operation instruction. The data information can be an immediate operand or a register number. For example, to acquire a matrix, matrix starting address and matrix length can be obtained from a corresponding register according to the register number, and then the matrix stored in the corresponding address can be obtained from the storage unit according to the matrix starting address and the matrix length.

There are several matrix multiplication instructions in the following.

Matrix Multiplying Vector instruction (MMV). According to the instruction, the device fetches matrix data and vector data with a specified size from a specified address of the Scratchpad Memory to perform multiplication between matrix and vector in the matrix operation unit, and writes the result back into a specified address of the Scratchpad Memory; it should be noted that vector can be stored as a matrix of a specific form (with only one row of elements) in the Scratchpad Memory.

Vector Multiplying Matrix instruction (VMM). According to the instruction, the device fetches vector data and matrix data with a specified length from a specified address of the Scratchpad Memory to perform multiplication between vector and matrix in the matrix operation unit, and writes the result back into a specified address of the Scratchpad Memory; it should be noted that Vector can be stored as a matrix of a specific form (with only one row of elements) in the Scratchpad Memory.

Matrix Multiplication instruction (MM). According to the instruction, the device fetches matrix data with a specified size from a specified address of the Scratchpad Memory to perform matrix multiplication in the matrix operation unit, and writes the result back into a specified address of the Scratchpad Memory.

Matrix Multiplying Scalar instruction (MMS). According to MMS, the device fetches matrix data with a specified size from a specified address of the Scratchpad Memory and fetches scalar data from a specified address of the scalar register file to perform multiplication between matrix and scalar in the matrix operation unit, and writes the result back into a specified address of the Scratchpad Memory, and writes the result back into a specified address of the Scratchpad Memory. It should be noted that the scalar register file stores not only the matrix address but also the scalar data.

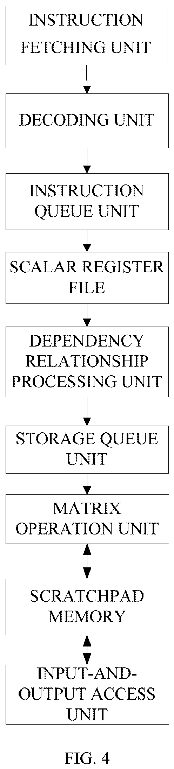

FIG. 4 is a schematic structural diagram illustrating device for executing a matrix multiplication operation according to an embodiment of the present disclosure. As illustrated in FIG. 4, the device for executing a matrix multiplication operation includes an instruction fetching unit, a decoding unit, an instruction queue unit, a scalar register file, a dependency relationship processing unit, a storage queue unit, a matrix operation unit, a Scratchpad Memory, and an IO access unit.

The instruction fetching unit is responsible for fetching the next instruction to be executed from the instruction sequence and transmitting the instruction to the decoding unit.

The decoding unit is responsible for decoding the instruction and transmitting the decoded instruction to the instruction queue unit.

The instruction queue unit is configured to temporarily store the decoded matrix operation instruction, obtain scalar data associated with the operation of the matrix operation instruction from the matrix operation instruction or a scalar register file; to send the matrix operation instruction to a dependency relationship processing unit after obtaining the scalar data;

The scalar register file is configured to provide the device with scalar register required in calculation. The scalar register file includes multiple scalar registers and the scalar registers are configured to store the scalar data associated with the matrix operation instruction.

The dependency relationship processing unit is responsible for processing a possible storage dependency relationship between an instruction to be processed and its previous instruction. The matrix operation instruction would access the Scratchpad Memory and successive instructions may access the same memory space. That is, the dependency relationship processing unit will detect whether a storage range of inputting data of a current instruction overlaps with a storage range of outputting data of an instruction that has not been completed before. It indicates that the current instruction logically needs to use a calculation result of the previous instruction when the storage range of the inputting data of the current instruction overlaps with the storage range of the outputting data of an instruction that has not been completed before, so the current instruction must wait to be executed until the previous instructions that the current instruction depends on is completed. In this process, the current instruction is actually temporarily stored in the following storage queue. To ensure the correctness of an execution result of the instruction, the current instruction, if detected to have a dependency relationship with data of the previous instruction, must wait within the storage queue until such dependency relationship is eliminated.

The storage queue is a unit with a sequential queue. An instruction having a dependency relationship with the previous instruction in terms of data is stored in such a queue until the dependency relationship is eliminated.

The matrix operation unit is configured to perform a matrix multiplication operation on the matrix.

The Scratchpad Memory is a temporary storage device specialized for matrix data, and capable to support matrix data of different sizes. The Scratchpad Memory is mainly configured to store an inputting matrix and an outputting matrix.

An IO memory access unit is configured to directly access the Scratchpad Memory, and to read or write data from or into the Scratchpad Memory.

The device for executing a matrix multiplication operation provided in the disclosure temporarily stores the matrix data participating in the calculation in a storage unit (for example, a Scratchpad Memory), allowing in the process of matrix operation to support data with different widths more flexibly and at the same time realizing various matrix multiplication operations more efficiently by customized matrix operating unit, and improving the execution performance of a large number of matrix calculation tasks. The instructions adopted by the present disclosure are easy to use and can support matrix of flexible length.

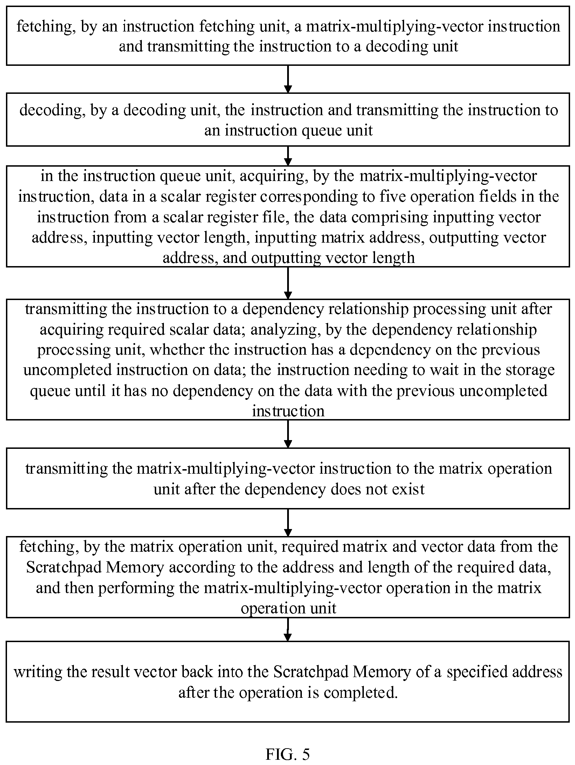

Fig. 5 is a schematic flow chart illustrating the process that a device for executing a matrix multiplication operation provided in the embodiments of the present disclosure executes a matrix-multiplying-vector instruction. As illustrated in Fig. 5, the process of performing the matrix-multiplying-vector instruction includes the follows.
S1: the instruction fetching unit fetches the matrix-multiplying-vector instruction and transmits the instruction to the decoding unit.
S2: the decoding unit decodes the instruction, and transmits the instruction to the instruction queue unit.
S3: In the instruction queue unit, the matrix-multiplying-vector instruction needs to acquire, from a scalar register file, data in a scalar register corresponding to five operation fields in the instruction, including inputting vector address, inputting vector length, inputting matrix address and outputting vector address and length.
S4: after acquiring the needed scalar data, the instruction is sent to the dependency relationship processing unit. The dependency relationship processing unit analyzes whether the instruction has a dependency on the previous uncompleted instruction on data. The instruction needs to wait in the storage queue until it has no dependency relationship on data with the previous uncompleted instruction.
S5: after the dependency relationship does not exist, the matrix-multiplying-vector instruction is transmitted to the matrix operations unit.
S6, the matrix operation unit fetches the required matrix data and vector data from the Scratchpad Memory according to the address and length of the required data to perform the operation of matrix multiplying vector in the matrix operation unit.
S7, having completed the operation, the device writes the result back into a specified address of the Scratchpad Memory.

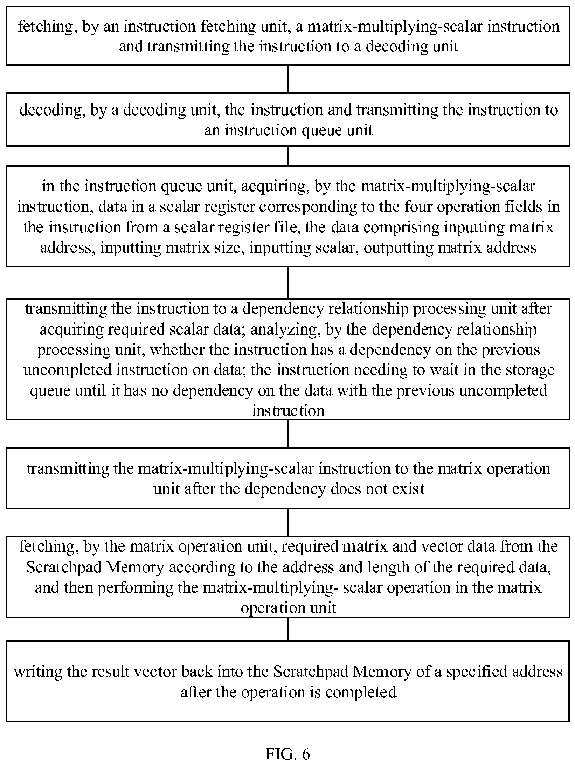

Fig. 6 is a schematic flow chart illustrating the process that a device for executing a matrix multiplication operation provided in the embodiments of the present disclosure executes a matrix-multiplying-scalar instruction. As illustrated in Fig. 6, the process of performing the matrix-multiplying-scalar instruction includes the follows.
S1: the instruction fetching unit fetches the matrix-multiplying-scalar instruction and transmits the instruction to the decoding unit.
S2: the decoding unit decodes the instruction, and transmits the instruction to the instruction queue unit.
S3: In the instruction queue unit, the matrix-multiplying-scalar instruction needs to acquire, from a scalar register file, data in a scalar register corresponding to four operation fields in the instruction, including inputting matrix address, inputting matrix size, inputting scalar, outputting matrix address.
S4: after acquiring required scalar data, the instruction is sent to the dependency relationship processing unit. The dependency relationship processing unit analyzes whether the instruction has a dependency on the previous uncompleted instruction on data. The instruction needs to wait in the storage queue until it has no dependency relationship on data with the previous uncompleted instruction.
S5: after the dependency relationship does not exist, the matrix-multiplying-scalar instruction is transmitted to the matrix operation unit.
S6, the matrix operation unit fetches the required matrix data from the Scratchpad Memory according to the address and length of the required data to perform the operation of matrix multiplying vector in the matrix operation unit.
S7, having completed the operation, the device writes the result matrix back into a specified address of the Scratchpad Memory.

As such, the present disclosure provides a device for executing a matrix multiplication operation, cooperating with corresponding instructions, for offering a solution to the problem in the related art where more and more algorithms involve a large number of matrix operations. Different from the traditional solutions, the present disclosure features such advantages as easiness of using, supportability in various matrices and sufficiency of on-chip cache. The present disclosure is useful in many computing tasks involving numerous matrix operations, including reversal training and forward prediction in popular artificial neural network algorithm as well as traditional numerical computation method of power multiplication for calculating maximum eigenvalue of an irregulable matrix.

While the disclosure has been illustrated by reference to specific embodiments, it should be understood that the disclosure is intended not to be limited by the foregoing description, but to be defined to perform the examples thereof. In other words, any modification, equivalent replacement or improvement thereof should all fall into the protection scope of the present disclosure.

## Claims

1. A device for executing a matrix multiplication operation, comprising:
a controlling unit, configured to decode a matrix operation instruction and control operation process of the matrix operation instruction; and
a matrix operation unit connected with said controlling unit;
said matrix operation unit is, configured to receive the decoded matrix operation instruction and an inputting matrix, and perform a matrix multiplication operation on the inputting matrix according to the decoded matrix operation instruction; the matrix operation unit being a customized hardware circuit;
wherein the matrix operation unit comprises a main operation unit and a plurality of slave operation units;
each of the plurality of slave operation units is configured to implement a vector dot product operation, and the vector dot product operation comprises an element-wise multiplication of two vectors and a summation of the multiplication results;
wherein each slave operation unit comprises a vector element-wise multiplication unit, an addition tree unit, and an accumulation unit;
the vector element-wise multiplication unit is configured to perform an element-wise multiplication of the two vectors,
the addition tree unit is configured to add result vectors of the element-wise multiplication to obtain a number, and
the accumulation unit is configured to accumulate results of the addition tree unit;
wherein the main operation unit comprises a vector element-wise multiplication unit, an addition tree unit, and an accumulation unit;
the vector element-wise multiplication unit is configured to perform an element-wise multiplication of the two vectors,
the addition tree unit is configured to add result vectors of the element-wise multiplication to obtain a number, and
the accumulation unit is configured to accumulate results of the addition tree unit.

2. The device of claim 1, further comprising:
a storage unit, configured to store matrix data associated with the matrix operation instruction;
a register unit, configured to store scalar data associated with the matrix operation instruction.

3. The device of claim 2, wherein the register unit comprises a scalar register file.

4. The device of claim 2, wherein
the scalar data stored in the register unit comprises a matrix address and a matrix length;
when a matrix-multiplying-vector operation is performed, the register unit is further configured to store a vector address and a vector length;
when a matrix-multiplying-scalar operation is performed, the register unit is further configured to store scalar data to be multiplied by the matrix.

5. The device of claim 1, wherein the controlling unit comprises:
an instruction queue unit, configured to store the decoded matrix operation instruction and acquire the scalar data associated with the matrix operation instruction.

6. The device of claim 1, wherein the controlling unit comprises:
a dependency relationship processing unit, configured to determine whether a current matrix operation instruction has a dependency on a previous uncompleted matrix operation instruction before the matrix operation unit acquires the current matrix operation instruction.

7. The device of claim 1, wherein the controlling unit comprises:
a storage queue unit, configured to temporarily store the current matrix operation instruction when the current matrix operation instruction has a dependency on the previous uncompleted matrix operation instruction, and send the temporarily stored matrix operation instruction to the matrix operation unit when the dependency is eliminated.

8. The device of any of claims 1 to 7, further comprising:
an instruction cache unit, configured to store a matrix operation instruction to be executed; and
an input-and-output unit, configured to store data associated with the matrix operation instruction in the storage unit, or acquire a operation result of the matrix operation instruction from the storage unit.

9. The device of claim 1, wherein the matrix operation instruction comprises an operation code and an operation field;
the operation code is configured to indicate execution of a matrix operation; and
the operation field comprises an immediate operand and/or a register number, and is configured to indicate scalar data associated with a matrix operation, and the register number is configured to point to the address of the register unit.

10. The device of any of claims 1 to 7 and claim 9, wherein the storage unit is a Scratchpad Memory.

11. The device of claim 1, wherein
in the process of multiplication operation of two matrices A and B, data of the matrix B is sequentially stored in each slave operation unit by columns, the first column is stored in a first slave operation unit, the second column is stored in a second slave operation unit, ..., the *(N+1)^{th}* column is stored in the *(N+1)^{th}* slave operation unit; data of the matrix A is stored in the main operation unit;
in the calculation process, the main operation unit is configured to sequentially traverse each row of the matrix A, and to take out one row of data of A each time, and to broadcast it to all the slave operation units; each slave operation unit is configured to complete dot product operation of row data of the matrix A and the column data stored by itself and to return a result to the main operation unit, the main operation unit is configured to obtain all data returned from the slave operation units, and finally to obtain corresponding rows of a result matrix; and
as for a specific calculation process of each slave operation unit, the slave operation unit is configured to extract a part of the two vectors each time, the width of the extraction is equal to calculation- bit-width of the slave operation unit, which is the number of element-wise multiplications that can be simultaneously performed by the vector element-wise multiplication unit of the slave operation unit; to send a result of the part of the two vectors after the element-wise multiplication to the addition tree unit to obtain a value, and to store the value temporarily in the accumulation unit; when a result of the addition tree of next section of vectors is sent to the accumulation unit, the result is added to the value, and to complete the vector inner product operation by the method of the segmentation operation.

12. The device of claim 1, wherein the matrix-multiplying-scalar operation is performed in the main operation unit, the main operation unit is configured to expand a scalar into a vector, to sequentially traverse each row of the matrix, and to take out a part of a row each time, the width of the extraction is equal to the calculation-bit-width of the slave operation unit, which is the number of element-wise multiplications that can be simultaneously performed by the vector element-wise multiplication unit of the main operation unit; to send a result of the part of the two vectors after the element-wise multiplication to the addition tree unit to obtain a value, and to store the value temporarily in the accumulation unit; when a result of the addition tree of next section of vectors is sent to the accumulation unit, the result is added to the value, to complete the vector inner product operation by the method of the segmentation operation, and the result of the matrix-multiplying-scalar operation is obtained.

13. The device of claim 2 or 3, wherein said matrix operation instructions comprising:
a Matrix Multiplying Vector Instruction, according to which instruction, the device fetches matrix data and vector data with specified size from specified addresses of the storage unit to perform multiplication between matrix and vector in the matrix operations unit, and writes the result back into a specified address of the storage unit;
a Vector Multiplying Matrix Instruction, according to which instruction, the device fetches vector data and matrix data with a specified size from specified addresses of the storage unit to perform multiplication between vector and matrix in the matrix operations unit, and writes the result back into a specified address of the storage unit;
a Matrix Multiplying Instruction, according to which instruction, the device fetches matrix data with specified size from specified addresses of the storage unit to perform matrix multiplication in the matrix operations unit, and writes the result back into a specified address of the storage unit; and
a Matrix Multiplying Scalar Instruction, according to which instruction, the device fetches matrix data of a specified size from a specified address of the storage unit and scalar data of a specified size from a specified address of the register unit, multiplies scalar and matrix in the matrix operations unit and writes the result back into a specified address of the storage unit.

14. The device according to any one of claims 1-13, comprising:
an instruction fetching unit, configured to fetch a matrix operation instruction to be executed next time from an instruction sequence, and transmit the matrix operation instruction to a decoding unit;
the decoding unit, configured to decode the matrix operation instruction and transmit the decoded matrix operation instruction to an instruction queue unit;
the instruction queue unit, configured to temporarily store the decoded matrix operation instruction, obtain scalar data associated with the operation of the matrix operation instruction from the matrix operation instruction or a scalar register; and to send the matrix operation instruction to the dependency relationship processing unit after obtaining the scalar data;
the scalar register file, comprising a plurality of scalar registers;
the dependency relationship processing unit, configured to send the matrix operation instruction to a storage queue unit if the matrix operation instruction has a dependency on the previous uncompleted matrix operation instruction; to send the matrix operation instruction to the matrix operation unit if the matrix operation instruction does not have a dependency on the previous uncompleted matrix operation instruction;
an input-and-output access unit, configured to access the Scratchpad Memory directly, and be responsible for reading the outputting matrix from the Scratchpad Memory and writing the inputting matrix into the Scratchpad Memory.

15. A method for executing a matrix multiplication operation, comprising:
a controlling unit decoding a matrix operation instruction and controlling operation process of the matrix operation instruction;
providing a matrix operation unit connected with said controlling unit; and
the matrix operation unit receiving the decoded matrix operation instruction and an inputting matrix, and performing a matrix multiplication operation on the inputting matrix according to the decoded matrix operation instruction;
wherein the matrix operation unit comprises a main operation unit and a plurality of slave operation units;
the method further comprising:
each of the plurality of slave operation units implementing a vector dot product operation, and the vector dot product operation comprises an element-wise multiplication of two vectors and a summation of the multiplication results;
wherein each slave operation unit comprises a vector element-wise multiplication unit, an addition tree unit, and an accumulation unit;
the method further comprising:
the vector element-wise multiplication unit performing an element-wise multiplication of the two vectors,
the addition tree unit adding result vectors of the element-wise multiplication to obtain a number, and
the accumulation unit accumulating results of the addition tree unit;
wherein the main operation unit comprises a vector element-wise multiplication unit, an addition tree unit, and an accumulation unit;
the method further comprising:
the vector element-wise multiplication unit performing an element-wise multiplication of the two vectors,
the addition tree unit adding result vectors of the element-wise multiplication to obtain a number, and
the accumulation unit accumulating results of the addition tree unit.

16. The method according to claim 15, comprising
a storage unit storing matrix data associated with the matrix operation instruction;
a register unit storing scalar data associated with the matrix operation instruction.

17. The method according to any of claim 15-16 for performing a matrix-multiplying-vector operation, comprising:
wherein the controlling unit comprises a dependency relationship processing unit,
wherein the method further comprises
the dependency relationship processing unit analyzing whether a matrix-multiplying-vector instruction has a dependency in respect of data on the previous uncompleted instruction; wherein the matrix-multiplying-vector instruction needs to wait in a storage queue until it has no dependency in respect of data with any previous uncompleted instruction;
transmitting the matrix-multiplying-vector instruction to the matrix operation unit after the dependency does not exist;
fetching, by the matrix operation unit, required matrix and vector data from the storage unit according to an address and length of the required data, and then performing the matrix-multiplying-vector operation in the matrix operation unit; and
writing a result vector back into a specified address of the storage unit after the operation is completed.

18. The method according to claim 17, comprising
an instruction fetching unit fetching the matrix-multiplying-vector instruction and transmitting said instruction to a decoding unit;
the decoding unit decoding the instruction and transmitting the instruction to an instruction queue unit;
in the instruction queue unit, the matrix-multiplying-vector instruction acquiring data of a scalar register corresponding to five operation fields of the instruction from a scalar register file;
transmitting the instruction to the dependency relationship processing unit, when scalar data is acquired.

19. The method according to claim 18, wherein the data of the scalar register corresponding to the five operation fields of the instruction comprises an address of an input vector, a length of the input vector, an address of an input matrix, an address of an output vector, a length of the output vector.

20. The method according to any of claim 15-16 for performing a matrix-multiplying-scalar operation, comprising: wherein the controlling unit comprises a dependency relationship processing unit,
wherein the method further comprises
the dependency relationship processing unit analyzing whether a matrix-multiplying-scalar instruction has a dependency in respect of data on the previous uncompleted instruction; wherein the matrix-multiplying-scalar instruction needs to wait in a storage queue until it has no dependency in respect of data with the previous uncompleted instruction;
transmitting the matrix-multiplying-scalar instruction to the matrix operation unit after the dependency does not exist;
fetching, by the matrix operation unit, required matrix data from the storage unit according to an address and length of the required data, and then performing the matrix-multiplying- scalar operation in the matrix operation unit; and
writing a result matrix back into a specified address of the storage unit after the operation is completed.

21. The method according to claim 20, comprising:
an instruction fetching unit fetching the matrix-multiplying-scalar instruction and transmitting said instruction to a decoding unit;
the decoding unit decoding the instruction and transmitting the instruction to an instruction queue unit;
in the instruction queue unit, the matrix-multiplying-scalar instruction acquiring data of a scalar register corresponding to four operation fields of the instruction from a scalar register file;
transmitting the instruction to the dependency relationship processing unit, when scalar data is acquired.

22. The method according to claim 21, wherein the data of the scalar register corresponding to the four operation fields of the instruction comprises an address of an input matrix, a size of the input matrix, an input scalar, an address of an output matrix.

## Patentansprüche

1. Vorrichtung zum Ausführen einer Matrixmultiplikationsoperation, umfassend:
eine Steuerungseinheit, ausgelegt zum Decodieren einer Matrixoperationsanweisung und Steuern eines Operationsprozesses der Matrixoperationsanweisung; und
eine Matrixoperationseinheit, verbunden mit der Steuerungseinheit;
wobei die Matrixoperationseinheit ausgelegt ist zum Empfangen der decodierten Matrixoperationsanweisung und einer Eingabematrix und zum Durchführen einer Matrixmultiplikationsoperation an der Eingabematrix gemäß der decodierten Matrixoperationsanweisung; wobei die Matrixoperationseinheit eine maßgeschneiderte Hardwareschaltungsanordnung ist;
wobei die Matrixoperationseinheit eine Hauptoperationseinheit und eine Vielzahl von Slave-Operationseinheiten umfasst;
wobei jede der Vielzahl von Slave-Operationseinheiten ausgelegt ist zum Implementieren einer Vektor-Skalarproduktoperation und die Vektor-Skalarproduktoperation eine elementweise Multiplikation von zwei Vektoren und eine Summierung der Multiplikationsergebnisse umfasst;
wobei jede Slave-Operationseinheit eine Vektorelementweise-Multiplikation-Einheit, eine Additionsbaumeinheit und eine Akkumulationseinheit umfasst;
wobei die Vektorelementweise-Multiplikation-Einheit ausgelegt ist zum Durchführen einer elementweisen Multiplikation der zwei Vektoren,
die Additionsbaumeinheit ausgelegt ist zum Addieren von Ergebnisvektoren der elementweisen Multiplikation, um eine Zahl zu erhalten, und
die Akkumulationseinheit ausgelegt ist zum Akkumulieren der Ergebnisse der Additionsbaumeinheit;
wobei die Hauptoperationseinheit eine Vektorelementweise-Multiplikation-Einheit, eine Additionsbaumeinheit und eine Akkumulationseinheit umfasst;
wobei die Vektorelementweise-Multiplikation-Einheit ausgelegt ist zum Durchführen einer elementweisen Multiplikation der zwei Vektoren,
die Additionsbaumeinheit ausgelegt ist zum Addieren von Ergebnisvektoren der elementweisen Multiplikation, um eine Zahl zu erhalten, und
die Akkumulationseinheit ausgelegt ist zum Akkumulieren der Ergebnisse der Additionsbaumeinheit.

2. Vorrichtung nach Anspruch 1, ferner umfassend:
eine Speicherungseinheit, ausgelegt zum Speichern von Matrixdaten, die mit der Matrixoperationsanweisung assoziiert sind;
eine Registereinheit, ausgelegt zum Speichern von Skalardaten, die mit der Matrixoperationsanweisung assoziiert sind.

3. Vorrichtung nach Anspruch 2, wobei die Registereinheit eine Skalarregisterdatei umfasst.

4. Vorrichtung nach Anspruch 2, wobei
die in der Registereinheit gespeicherten Skalardaten eine Matrixaddresse und eine Matrixlänge umfassen;
wenn eine Matrix-multipliziert-Vektor-Operation durchgeführt wird, ist die Registereinheit ferner ausgelegt zum Speichern einer Vektoradresse und einer Vektorlänge;
wenn eine Matrix-multipliziert-Skalar-Operation durchgeführt wird, ist die Registereinheit ferner ausgelegt zum Speichern von durch die Matrix zu multiplizierenden Skalardaten.

5. Vorrichtung nach Anspruch 1, wobei die Steuerungseinheit Folgendes umfasst:
eine Anweisungswarteschlangeneinheit, ausgelegt zum Speichern der decodierten Matrixoperationsanweisung und zum Erfassen der mit der Matrixoperationsanweisung assoziierten Skalardaten.

6. Vorrichtung nach Anspruch 1, wobei die Steuerungseinheit Folgendes umfasst:
eine Abhängigkeitsbeziehung-Verarbeitungseinheit, ausgelegt zum Bestimmen, ob eine aktuelle Matrixoperationsanweisung eine Abhängigkeit von einer früheren nicht-abgeschlossenen Matrixoperationsanweisung aufweist, bevor die Matrixoperationseinheit die aktuelle Matrixoperationsanweisung erfasst.

7. Vorrichtung nach Anspruch 1, wobei die Steuerungseinheit Folgendes umfasst:
eine Speicherungswarteschlangeneinheit, ausgelegt zum temporären Speichern der aktuellen Matrixoperationsanweisung, wenn die aktuelle Matrixoperationsanweisung eine Abhängigkeit von der früheren nicht-abgeschlossenen Matrixoperationsanweisung aufweist, und zum Senden der temporär gespeicherten Matrixoperationsanweisung an die Matrixoperationseinheit, wenn die Abhängigkeit beseitigt wurde.

8. Vorrichtung nach einem der Ansprüche 1 bis 7, die ferner Folgendes umfasst:
eine Anweisungscacheeinheit, ausgelegt zum Speichern einer auszuführenden Matrixoperationsanweisung; und eine Eingabe-und-Ausgabe-Einheit, ausgelegt zum Speichern von Daten, die mit der Matrixoperationsanweisung assoziiert sind, in der Speicherungseinheit oder zum Erfassen eines Operationsergebnisses der Matrixoperationsanweisung von der Speicherungseinheit.

9. Vorrichtung nach Anspruch 1, wobei die Matrixoperationsanweisung einen Operationscode und ein Operationsfeld umfasst;
der Operationscode ausgelegt ist zum Angeben einer Ausführung einer Matrixoperation; und
das Operationsfeld einen unmittelbaren Operanden und/oder eine Registernummer umfasst und ausgelegt ist zum Angeben von Skalardaten, die mit einer Matrixoperation assoziiert sind, und wobei die Registernummer dafür ausgelegt ist, auf die Adresse der Registereinheit zu zeigen.

10. Vorrichtung nach einem der Ansprüche 1 bis 7 und nach Anspruch 9, wobei die Speicherungseinheit ein Scratchpad-Speicher ist.

11. Vorrichtung nach Anspruch 1, wobei
in dem Prozess einer Multiplikationsoperation von zwei Matrizen A und B Daten der Matrix B sequenziell nach Spalten in jeder Slave-Operationseinheit gespeichert werden, wobei die erste Spalte in einer ersten Slave-Operationseinheit gespeichert wird, die zweite Spalte in einer zweiten Slave-Operationseinheit gespeichert wird, ..., die *(N+1) -te* Spalte in der *(N+1) -ten* Slave-Operationseinheit gespeichert wird; wobei Daten der Matrix A in der Hauptoperationseinheit gespeichert werden;
in dem Berechnungsprozess, die Hauptoperationseinheit ausgelegt ist zum sequenziellen Durchqueren jeder Zeile der Matrix A und zum Herausnehmen einer Zeile von Daten von A jedes Mal und zum Rundsenden von dieser an alle Slave-Operationseinheiten; wobei jede Slave-Operationseinheit dafür ausgelegt ist, eine Skalarproduktoperation von Zeilendaten der Matrix A und der von ihr selbst gespeicherten Spaltendaten abzuschließen und ein Ergebnis an die Hauptoperationseinheit zurückzugeben, wobei die Hauptoperationseinheit ausgelegt ist zum Erhalten aller von den Slave-Operationseinheiten zurückgegebenen Daten und schließlich zum Erhalten entsprechender Zeilen einer Ergebnismatrix; und
bezüglich eines spezifischen Berechnungsprozesses von jeder Slave-Operationseinheit, die Slave-Operationseinheit ausgelegt ist zum Extrahieren eines Teils der zwei Vektoren jedes Mal, wenn die Breite der Extraktion gleich einer Berechnungs-Bitbreite der Slave-Operationseinheit ist, welche die Anzahl von elementweisen Multiplikationen ist, die simultan durch die Vektorelementweise-Multiplikation-Einheit der Slave-Operationseinheit durchgeführt werden können; zum Senden eines Ergebnisses des Teils der zwei Vektoren nach der elementweisen Multiplikation an die Additionsbaumeinheit, um einen Wert zu erhalten und den Wert temporär in der Akkumulationseinheit zu speichern; wenn ein Ergebnis des Additionsbaums eines nächsten Abschnitts von Vektoren an die Akkumulationseinheit gesendet wird, wird das Ergebnis zu dem Wert addiert, um die Vektor-Skalarproduktoperation durch das Verfahren der Segmentationsoperation abzuschließen.

12. Vorrichtung nach Anspruch 1, wobei die Matrix-multipliziert-Skalar-Operation in der Hauptoperationseinheit durchgeführt wird, wobei die Hauptoperationseinheit ausgelegt ist zum Expandieren eines Skalars in einen Vektor, um jede Zeile der Matrix sequenziell zu Durchqueren und um jedes Mal einen Teil einer Zeile herauszunehmen, wobei die Breite der Extraktion gleich der Berechnungs-Bitbreite der Slave-Operationseinheit ist, welche die Anzahl von elementweisen Multiplikationen ist, die simultan durch die Vektorelementweise-Multiplikation-Einheit der Slave-Operationseinheit durchgeführt werden können; zum Senden eines Ergebnisses des Teils der zwei Vektoren nach der elementweisen Multiplikation an die Additionsbaumeinheit, um einen Wert zu erhalten und den Wert temporär in der Akkumulationseinheit zu speichern; wenn ein Ergebnis des Additionsbaums eines nächsten Abschnitts von Vektoren an die Akkumulationseinheit gesendet wird, das Ergebnis zu dem Wert addiert wird, um die Vektor-Skalarproduktoperation durch das Verfahren der Segmentationsoperation abzuschließen, und das Ergebnis der Matrix-multipliziert-Skalar-Operation erhalten wird.

13. Vorrichtung nach Anspruch 2 oder 3, wobei die Matrixoperationsanweisungen Folgendes umfassen:
eine Matrix-multipliziert-Vektor-Anweisung, wobei gemäß dieser Anweisung die Vorrichtung Matrixdaten und Vektordaten mit spezifizierter Größe aus spezifizierten Adressen der Speicherungseinheit fetcht, um eine Multiplikation zwischen Matrix und Vektor in der Matrixoperationseinheit durchzuführen, und das Ergebnis in eine spezifizierte Adresse der Speicherungseinheit zurückschreibt;
eine Vektor-multipliziert-Matrix-Anweisung, wobei gemäß dieser Anweisung die Vorrichtung Vektordaten und Matrixdaten mit einer spezifizierte Größe aus spezifizierten Adressen der Speicherungseinheit fetcht, um eine Multiplikation zwischen Vektor und Matrix in der Matrixoperationseinheit durchzuführen, und das Ergebnis in eine spezifizierte Adresse der Speicherungseinheit zurückschreibt;
eine Matrix-multipliziert-Matrix Anweisung, wobei gemäß dieser Anweisung die Vorrichtung Matrixdaten mit spezifizierter Größe aus spezifizierten Adressen der Speicherungseinheit fetcht, um eine Matrix-Multiplikation in der Matrixoperationseinheit durchzuführen, und das Ergebnis in eine spezifizierte Adresse der Speicherungseinheit zurückschreibt; und
eine Matrix-multipliziert-Skalar-Anweisung, wobei gemäß dieser Anweisung die Vorrichtung Matrixdaten einer spezifizierten Größe aus einer spezifizierten Adresse der Speicherungseinheit und Skalardaten einer spezifizierten Größe aus einer spezifizierten Adresse der Registereinheit fetcht, Skalar und Matrix in der Matrixoperationseinheit multipliziert und das Ergebnis in eine spezifizierte Adresse der Speicherungseinheit zurückschreibt.

14. Vorrichtung nach einem der Ansprüche 1-13, die Folgendes umfasst:
eine Anweisungsfetcheinheit, ausgelegt zum Fetchen einer Matrixoperationsanweisung, die beim nächsten Mal ausgeführt werden soll, aus einer Anweisungssequenz und zum Übermitteln der Matrixoperationsanweisung an eine Decodiereinheit;
wobei die Decodiereinheit ausgelegt ist zum Decodieren der Matrixoperationsanweisung und zum Übermitteln der decodierten Matrixoperationsanweisung an eine Anweisungswarteschlangeneinheit;
wobei die Anweisungswarteschlangeneinheit ausgelegt ist zum temporären Speichern der decodierten Matrixoperationsanweisung, Erhalten von Skalardaten, die mit der Operation der Matrixoperationsanweisung assoziiert sind, aus der Matrixoperationsanweisung oder einem Skalarregister; und zum Senden der Matrixoperationsanweisung an die Abhängigkeitsbeziehung-Verarbeitungseinheit nach Erhalten der Skalardaten;
die Skalarregisterdatei, die eine Vielzahl von Skalarregistern umfasst;
wobei die Abhängigkeitsbeziehung-Verarbeitungseinheit ausgelegt ist zum Senden der Matrixoperationsanweisung an eine Speicherungswarteschlangeneinheit, falls die Matrixoperationsanweisung eine Abhängigkeit von der früheren nicht-abgeschlossenen Matrixoperationsanweisung aufweist; zum Senden der Matrixoperationsanweisung an die Matrixoperationseinheit, falls die Matrixoperationsanweisung keine Abhängigkeit von der früheren nicht-abgeschlossenen Matrixoperationsanweisung aufweist;
eine Eingabe-und-Ausgabe-Zugriffseinheit, ausgelegt zum direkten Zugreifen auf den Scratchpad-Speicher und zum Verantwortlichsein zum Lesen der Ausgabematrix aus dem Scratchpad-Speicher und Schreiben der Eingabematrix in den Scratchpad-Speicher.

15. Verfahren zum Ausführen einer Matrixmultiplikationsoperation, umfassend:
eine Steuerungseinheit zum Decodieren einer Matrixoperationsanweisung und Steuern eines Operationsprozesses der Matrixoperationsanweisung;
Bereitstellen einer Matrixoperationseinheit, verbunden mit der Steuerungseinheit; und
wobei die Matrixoperationseinheit die decodierte Matrixoperationsanweisung und eine Eingabematrix empfängt und eine Matrixmultiplikationsoperation an der Eingabematrix gemäß der decodierten Matrixoperationsanweisung durchführt;
wobei die Matrixoperationseinheit eine Hauptoperationseinheit und eine Vielzahl von Slave-Operationseinheiten umfasst;
wobei das Verfahren ferner Folgendes umfasst:
jede der Vielzahl von Slave-Operationseinheiten implementiert eine Vektor-Skalarproduktoperation und die Vektor-Skalarproduktoperation umfasst eine elementweise Multiplikation von zwei Vektoren und eine Summierung der Multiplikationsergebnisse;
wobei jede Slave-Operationseinheit eine Vektorelementweise-Multiplikation-Einheit, eine Additionsbaumeinheit und eine Akkumulationseinheit umfasst;
wobei das Verfahren ferner Folgendes umfasst:
die Vektorelementweise-Multiplikation-Einheit führt eine elementweise Multiplikation der zwei Vektoren durch,
die Additionsbaumeinheit addiert Ergebnisvektoren der elementweisen Multiplikation, um eine Zahl zu erhalten, und
die Akkumulationseinheit akkumuliert Ergebnisse der Additionsbaumeinheit;
wobei die Hauptoperationseinheit eine Vektorelementweise-Multiplikation-Einheit, eine Additionsbaumeinheit und eine Akkumulationseinheit umfasst;
wobei das Verfahren ferner Folgendes umfasst:
die Vektorelementweise-Multiplikation-Einheit führt eine elementweise Multiplikation der zwei Vektoren durch,
die Additionsbaumeinheit addiert Ergebnisvektoren der elementweisen Multiplikation, um eine Zahl zu erhalten, und
die Akkumulationseinheit akkumuliert Ergebnisse der Additionsbaumeinheit.

16. Verfahren nach Anspruch 15, umfassend:
eine Speicherungseinheit, die mit der Matrixoperationsanweisung assoziierte Matrixdaten speichert;
eine Registereinheit, die mit der Matrixoperationsanweisung assoziierte Skalardaten speichert.

17. Verfahren nach einem der Ansprüche 15-16 zum Durchführen einer Matrix-multipliziert-Vektor-Operation, umfassend:
wobei die Steuerungseinheit eine Abhängigkeitsbeziehung-Verarbeitungseinheit umfasst,
wobei das Verfahren ferner umfasst, dass die Abhängigkeitsbeziehung-Verarbeitungseinheit analysiert, ob eine Matrix-multipliziert-Vektor-Anweisung eine Abhängigkeit hinsichtlich Daten von der früheren nicht-abgeschlossenen Anweisung aufweist;
wobei die Matrix-multipliziert-Vektor-Anweisung in einer Speicherungswarteschlange warten muss, bis sie keine Abhängigkeit hinsichtlich Daten von irgendeiner früheren nicht-abgeschlossenen Anweisung aufweist;
Übermitteln der Matrix-multipliziert-Vektor-Anweisung an die Matrixoperationseinheit, nachdem keine Abhängigkeit mehr besteht;
Fetchen, durch die Matrixoperationseinheit, benötigter Matrix- und Vektordaten aus der Speicherungseinheit, gemäß einer Adresse und einer Länge der benötigten Daten, und dann Durchführen der Matrix-multipliziert-Vektor-Operation in der Matrixoperationseinheit; und
Schreiben eines Ergebnisvektors zurück in eine spezifizierte Adresse der Speicherungseinheit, nachdem die Operation abgeschlossen wurde.

18. Verfahren nach Anspruch 17, umfassend eine Anweisungsfetcheinheit, die die Matrix-multipliziert-Vektor-Anweisung fetcht und die Anweisung an eine Decodiereinheit übermittelt;
wobei die Decodiereinheit die Anweisung decodiert und die Anweisung an eine Anweisungswarteschlangeneinheit übermittelt;
wobei, in der Anweisungswarteschlangeneinheit, die Matrix-multipliziert-Vektor-Anweisung Daten eines Skalarregisters, die fünf Operationsfeldern der Anweisung entsprechen, aus einer Skalarregisterdatei erfasst;
Übermitteln der Anweisung an die Abhängigkeitsbeziehung-Verarbeitungseinheit, wenn Skalardaten erfasst werden.

19. Verfahren nach Anspruch 18, wobei die Daten des Skalarregisters, die den fünf Operationsfeldern der Anweisung entsprechen, eine Adresse eines Eingabevektors, eine Länge des Eingabevektors, eine Adresse einer Eingabematrix, eine Adresse eines Ausgabevektors, eine Länge des Ausgabevektors umfassen.

20. Verfahren nach einem der Ansprüche 15-16 zum Durchführen einer Matrix-multipliziert-Skalar-Operation, umfassend:
wobei die Steuerungseinheit eine Abhängigkeitsbeziehung-Verarbeitungseinheit umfasst,
wobei das Verfahren ferner umfasst, dass die Abhängigkeitsbeziehung-Verarbeitungseinheit analysiert, ob eine Matrix-multipliziert-Skalar-Anweisung eine Abhängigkeit hinsichtlich Daten von der früheren nicht-abgeschlossenen Anweisung aufweist;
wobei die Matrix-multipliziert-Skalar-Anweisung in einer Speicherungswarteschlange warten muss, bis sie keine Abhängigkeit hinsichtlich Daten von der früheren nicht-abgeschlossenen Anweisung aufweist;
Übermitteln der Matrix-multipliziert-Skalar-Anweisung an die Matrixoperationseinheit, nachdem keine Abhängigkeit mehr besteht;
Fetchen, durch die Matrixoperationseinheit, benötigter Matrixdaten aus der Speicherungseinheit, gemäß einer Adresse und einer Länge der benötigten Daten, und dann Durchführen der Matrix-multipliziert-Skalar-Operation in der Matrixoperationseinheit; und
Schreiben einer Ergebnismatrix zurück in eine spezifizierte Adresse der Speicherungseinheit, nachdem die Operation abgeschlossen wurde.

21. Verfahren nach Anspruch 20, umfassend:
eine Anweisungsfetcheinheit, die die Matrix-multipliziert-Skalar-Anweisung fetcht und die Anweisung an eine Decodiereinheit übermittelt;
wobei die Decodiereinheit die Anweisung decodiert und die Anweisung an eine Anweisungswarteschlangeneinheit übermittelt;
wobei, in der Anweisungswarteschlangeneinheit, die Matrix-multipliziert-Skalar-Anweisung Daten eines Skalarregisters, die vier Operationsfeldern der Anweisung entsprechen, aus einer Skalarregisterdatei erfasst;
Übermitteln der Anweisung an die Abhängigkeitsbeziehung-Verarbeitungseinheit, wenn Skalardaten erfasst werden.

22. Verfahren nach Anspruch 21, wobei die Daten des Skalarregisters, die den vier Operationsfeldern der Anweisung entsprechen, eine Adresse einer Eingabematrix, eine Größe der Eingabematrix, einen Eingabeskalar, eine Adresse einer Ausgabematrix umfassen.

## Revendications

1. Dispositif destiné à exécuter une opération de multiplication de matrices, comprenant :
une unité de commande configurée pour décoder une instruction d'opération matricielle et pour commander un processus fonctionnel de l'instruction d'opération matricielle, et
une unité d'opération matricielle reliée à ladite unité de commande,
ladite unité d'opération matricielle étant configurée pour recevoir l'instruction d'opération matricielle décodée et une matrice d'entrée et pour effectuer une opération de multiplication matricielle sur la matrice d'entrée en fonction de l'instruction d'opération matricielle décodée, l'unité d'opération matricielle étant un circuit matériel personnalisé,
dans lequel l'unité d'opération matricielle comprend une unité d'opération principale et une pluralité d'unités d'opération esclaves,
chacune de la pluralité d'unités d'opération esclaves est configurée pour implémenter une opération de produit scalaire de vecteurs, et l'opération de produit scalaire de vecteur comprend une multiplication par élément de deux vecteurs et une sommation des résultats de multiplication,
dans lequel chaque unité d'opération esclave comprend une unité de multiplication par élément de vecteurs, une unité d'arborescence d'addition et une unité d'accumulation,
l'unité de multiplication par élément de vecteurs est configurée pour effectuer une multiplication par élément des deux vecteurs,
l'unité d'arborescence d'addition est configurée pour ajouter les vecteurs de résultat de la multiplication par élément pour obtenir un nombre, et
l'unité d'accumulation est configurée pour accumuler de l'unité d'arborescence d'addition,
dans lequel l'unité d'opération principale comprend une unité de multiplication par élément de vecteurs, une unité d'arborescence d'addition et une unité d'accumulation,
l'unité de multiplication par élément de vecteurs est configurée pour effectuer une multiplication par élément des deux vecteurs,
l'unité d'arborescence d'addition est configurée pour ajouter les vecteurs de résultat de la multiplication par élément pour obtenir un nombre, et
l'unité d'accumulation est configurée pour accumuler les résultats de l'unité d'arborescence d'addition.

2. Dispositif selon la revendication 1, comprenant en outre :
une unité de stockage configurée pour stocker des données de matrice associées à l'instruction d'opération matricielle,
une unité de registre configurée pour stocker des données scalaires associées à l'instruction d'opération matricielle.

3. Dispositif selon la revendication 2, dans lequel l'unité de registre comprend un fichier de registre scalaire.

4. Dispositif selon la revendication 2, dans lequel :
les données scalaires stockées dans l'unité de registre comprennent une adresse de matrice et une longueur de matrice
lorsqu'une opération de multiplication vecteur matrice est effectuée, l'unité de registre est en outre configurée pour stocker une adresse de vecteur et une longueur de vecteur,
lorsqu'une opération de multiplication scalaire matrice est effectuée, l'unité de registre est en outre configurée pour stocker des données scalaires à multiplier par la matrice.

5. Dispositif selon la revendication 1, dans lequel l'unité de commande comprend :
une unité de file d'attente d'instruction configurée pour stocker une instruction d'opération matricielle décodée et pour acquérir les données scalaires associées à l'instruction d'opération matricielle.

6. Dispositif selon la revendication 1, dans lequel l'unité de commande comprend :
une unité de traitement de relation de dépendance configurée pour déterminer si une instruction courante d'opération matricielle présente une dépendance sur une instruction d'opération matricielle non complétée avant que l'unité d'opération matricielle acquière l'instruction courante d'opération matricielle.

7. Dispositif selon la revendication 1, dans lequel l'unité de commande comprend :
une unité de file d'attente de stockage configurée pour stocker temporairement l'instruction courante d'opération matricielle lorsque l'instruction courante d'opération matricielle présente une dépendance sur l'instruction précédente d'opération matricielle non complétée, et pour envoyer l'instruction d'opération matricielle stockée temporairement vers l'unité d'opération matricielle lorsque la dépendance est éliminée.

8. Dispositif selon l'une quelconque des revendications 1 à 7, comprenant en outre :
une unité d'antémémoire d'instruction, configurée pour stocker une instruction d'opération matricielle à exécuter, et
une unité d'entrée et sortie configurée pour stocker des données associées à l'instruction d'opération matricielle dans l'unité de stockage ou pour acquérir un résultat d'opération de l'instruction d'opération matricielle auprès de l'unité de stockage.

9. Dispositif selon la revendication 1, dans lequel l'instruction d'opération matricielle comprend un code d'opération et un champ d'opération,
le code d'opération est configuré pour indiquer l'exécution d'une opération matricielle, et
le champ d'opération comprend un opérande immédiat et/ou un numéro de registre, et il est configuré pour indiquer des données scalaires associées à une opération matricielle, et le numéro de registre est configuré pour pointer sur l'adresse de l'unité de registre.

10. Dispositif selon l'une quelconque des revendications 1 à 7 et la revendication 9, dans lequel l'unité de stockage et une mémoire bloc-notes.

11. Dispositif selon la revendication 1, dans lequel :
lors du traitement de l'opération de multiplication de deux matrices, A et B, des données de la matrice B sont stockées séquentiellement dans chaque unité d'opération esclave par colonne, la première colonne étant stockée dans une première unité d'opération esclave, la seconde colonne étant stockée dans une seconde unité d'opération esclave, ..., la (N + 1)e colonne étant stockée dans la(N + l)e unité d'opération esclave ; les données de la matrice A sont stockées dans l'unité d'opération principale,
lors du traitement de calcul, l'unité d'opération principale est configurée pour traverser séquentiellement chaque rangée de la matrice A et pour extraire une rangée de données de A à chaque fois, ainsi que pour la diffuser à toutes les unités d'opération esclaves ; chaque unité d'opération esclave est configurée pour achever une opération de produit scalaire de données en rangées de la matrice A et des données en colonnes stockées par elle-même, ainsi que pour renvoyer un résultat à l'unité d'opération principale, l'unité d'opération principale étant configurée pour récupérer toutes les données renvoyées des unités d'opération esclaves et pour récupérer finalement des rangées correspondantes d'une matrice de résultat, et
tout comme pour un traitement de calcul spécifique de chaque unité d'opération esclave, l'unité d'opération esclave est configurée pour extraire une partie des deux vecteurs à chaque fois, la largeur de l'extraction étant égale à la largeur binaire de calcul de l'unité d'opération esclave qui représente le nombre de multiplications par élément qui peuvent être effectuées simultanément par l'unité de multiplication par élément de vecteurs de l'unité d'opération esclave ; pour envoyer le résultat de la partie des deux vecteurs après la multiplication par élément vers l'unité d'arborescence d'addition pour obtenir une valeur, et pour stocker temporairement la valeur dans l'unité d'accumulation ; lorsque le résultat de l'arborescence d'addition de la section suivante de vecteurs est envoyé à l'unité d'accumulation, le résultat est ajouté à la valeur ; et pour achever l'opération de produit interne de vecteurs par le procédé de l'opération de segmentation.

12. Dispositif selon la revendication 1, dans lequel l'opération de multiplication scalaire matrice est effectuée dans l'unité d'opération principale, l'unité d'opération principale est configurée pour étendre un scalaire en un vecteur, pour traverser séquentiellement chaque rangée de la matrice et pour extraire une partie d'une rangée à chaque fois, la largeur de l'extraction étant égale à la largeur binaire de calcul de l'unité d'opération esclave qui représente le nombre de multiplications par élément qui peuvent être effectuées simultanément par l'unité de multiplication par élément de vecteurs de l'unité d'opération principale ; pour renvoyer le résultat de la partie des deux vecteurs après la multiplication par élément à l'unité d'arborescence d'addition pour obtenir une valeur, et pour stocker temporairement la valeur dans l'unité d'accumulation ; lorsque le résultat de l'arborescence d'addition de la section suivante de vecteurs est envoyé à l'unité d'accumulation, le résultat est ajouté à la valeur, pour achever l'opération de produit interne de vecteurs par le procédé de l'opération de segmentation, et l'on obtient le résultat de l'opération de multiplication scalaire matrice.

13. Dispositif selon la revendication 2 ou la revendication 3, dans lequel lesdites instructions d'opération matricielle comprennent :
une instruction de multiplication matrice vecteur selon laquelle le dispositif extrait des données matricielles et des données vectorielles présentant une taille spécifiée à partir d'adresses spécifiées de l'unité de stockage pour effectuer une multiplication entre une matrice et un vecteur dans l'unité d'opération matricielle, et il écrit en retour le résultat dans une adresse spécifiée de l'unité de stockage,
une instruction de multiplication vecteur matrice selon laquelle le dispositif extrait des données vectorielles et des données matricielles présentant une taille spécifiée à partir d'adresses spécifiées de l'unité de stockage pour effectuer une multiplication entre un vecteur et une matrice dans l'unité d'opération matricielle, et il écrit en retour le résultat dans une adresse spécifiée de l'unité de stockage,
une instruction de multiplication de matrices selon laquelle le dispositif extrait des données de matrices présentant une taille spécifiée à partir d'adresses spécifiées de l'unité de stockage afin d'effectuer une multiplication de matrices dans l'unité d'opération matricielle, et il écrit en retour le résultat dans une adresse spécifiée de l'unité de stockage, et
une instruction de multiplication scalaire matrice selon laquelle le dispositif extrait des données de matrices d'une taille spécifiée à partir d'une adresse spécifiée de l'unité de stockage et des données scalaires d'une taille spécifiée à partir d'une adresse spécifiée de l'unité de registre, multiplie le scalaire et la matrice dans l'unité d'opération matricielle et écrit en retour le résultat dans une adresse spécifiée de l'unité de stockage.

14. Dispositif selon l'une quelconque des revendications 1 à 13, comprenant :
une unité d'extraction d'instruction configurée pour extraire une instruction d'opération matricielle à exécuter une fois prochaine à partir d'une séquence d'instructions, et pour transmettre l'instruction d'opération matricielle à une unité de décodage,
l'unité de décodage configurée pour décoder l'instruction d'opération matricielle et pour transmettre l'instruction d'opération matricielle décodée à une unité de file d'attente d'instructions,
l'unité de file d'attente d'instructions configurée pour stocker temporairement l'instruction d'opération matricielle décodée, pour récupérer des données scalaires associées à l'opération de l'instruction d'opération matricielle auprès de l'instruction d'opération matricielle ou d'un registre scalaire, ainsi que pour envoyer l'instruction d'opération matricielle vers l'unité de traitement de relations de dépendance après avoir récupéré les données scalaires,
le fichier de registres scalaires comprenant une pluralité de registres scalaires,
l'unité de traitement de relations de dépendance configurée pour envoyer l'instruction d'opération matricielle à une unité de file d'attente de stockage si l'instruction d'opération matricielle présente une dépendance sur l'instruction précédente d'opération matricielle non complétée ; pour envoyer l'instruction d'opération matricielle à l'unité d'opération matricielle si l'instruction d'opération matricielle ne présente aucune dépendance sur l'instruction précédente d'opération matricielle non complétée,
une unité d'accès en entrée et en sortie configurée pour accéder directement à la mémoire bloc-notes et chargée de lire la matrice de sortie à partir de la mémoire bloc-notes et d'écrire la matrice d'entrée dans la mémoire bloc-notes.

15. Procédé d'exécution d'une opération de multiplication de matrices, comprenant :
le décodage d'une instruction d'opération matricielle par une unité de commande et le pilotage du traitement d'opération de l'instruction d'opération matricielle,
l'utilisation d'une unité d'opération matricielle reliée à ladite unité de commande, et
la réception par l'unité d'opération matricielle de l'instruction d'opération matricielle décodée et d'une matrice d'entrée, et la réalisation d'une opération de multiplication de matrices sur la matrice d'entrée en fonction de l'instruction d'opération matricielle décodée,
dans lequel l'unité d'opération matricielle comprend une unité d'opération principale et une pluralité d'unités d'opération esclaves,
le procédé comprenant en outre :
l'implémentation par chacune de la pluralité d'unités d'opération esclaves d'une opération de produit scalaire de vecteurs, et l'opération de produit scalaire de vecteurs comprend une multiplication par élément de deux vecteurs et une sommation des résultats de multiplication,
dans lequel chaque unité d'opération esclave comprend une unité de multiplication par élément de vecteurs, une unité d'arborescence d'addition et une unité d'accumulation,
le procédé comprenant en outre :
la réalisation d'une multiplication par élément des deux vecteurs par l'unité de multiplication par élément de vecteurs,
l'ajout des vecteurs de résultats de la multiplication par élément par l'unité d'arborescence d'addition pour obtenir un nombre, et
l'accumulation des résultats de l'unité d'arborescence d'addition par l'unité d'accumulation,
dans lequel l'unité d'opération principale comprend une unité de multiplication par élément de vecteurs, une unité d'arborescence d'addition et une unité d'accumulation,
le procédé comprenant en outre :
la réalisation d'une multiplication par élément des deux vecteurs par l'unité de multiplication par élément de vecteurs,
l'ajout des vecteurs de résultats de la multiplication par élément par l'unité d'arborescence d'addition pour obtenir un nombre, et
l'accumulation des résultats de l'unité d'arborescence d'addition par l'unité d'accumulation.

16. Procédé selon la revendication 15, comprenant :
le stockage par une unité de stockage de données matricielles associées à l'instruction d'opération matricielle,
le stockage par une unité de registre de données scalaires associées à l'instruction d'opération matricielle.

17. Procédé selon l'une quelconque des revendications 15 à 16, destiné à effectuer une opération de multiplication matrice vecteur comprenant :
l'unité de commande comprenant une unité de traitement de relations de dépendance,
le procédé comprenant en outre :
l'analyse par l'unité de traitement de relations de dépendance de ce qu'une instruction de multiplication matrice vecteur présente une dépendance par rapport à des données sur l'instruction précédente non complétée,
l'instruction de multiplication matrice vecteur devant attendre dans une file d'attente de stockage jusqu'à ce qu'elle ne présente plus de dépendance par rapport aux données avec toute instruction précédente non complétée,
la transmission de l'instruction de multiplication matrice vecteur à l'unité d'opération matricielle après la disparition de la dépendance,
l'extraction, par l'unité d'opération matricielle, de données de la matrice et de données de vecteur requises à partir de l'unité de stockage en fonction de l'adresse et de la longueur des données requises, puis l'exécution de l'opération de multiplication matrice vecteur dans l'unité d'opération matricielle, et
l'écriture du vecteur de résultat dans une adresse spécifiée de l'unité de stockage après l'achèvement de l'opération.

18. Procédé selon la revendication 17, comprenant :
l'extraction de l'instruction de multiplication matrice vecteur par une unité d'extraction d'instruction, et la transmission de ladite instruction à une unité de décodage,
le décodage de l'instruction par l'unité de décodage et la transmission de l'instruction à une unité de file d'attente d'instructions,
l'acquisition, dans l'unité de file d'attente instruction, par l'instruction de multiplication matrice vecteur de données d'un registre scalaire correspondant à cinq champs opératoires de l'instruction auprès d'un fichier de registre scalaire,
la transmission de l'instruction à l'unité de traitement de relations de dépendance lorsque les données scalaires sont acquises.

19. Procédé selon la revendication 18, dans lequel les données du registre scalaire correspondant aux cinq champs opératoires de l'instruction comprennent une adresse d'un vecteur d'entrée, la longueur du vecteur d'entrée, une adresse d'une matrice d'entrée, une adresse d'un vecteur de sortie, la longueur du vecteur de sortie.

20. Procédé selon l'une quelconque des revendications 15 à 16, destiné à réaliser une opération de multiplication matrice scalaire comprenant :
l'unité de commande comprenant une unité de traitement de relations de dépendance,
le procédé comprenant en outre :
l'analyse par l'unité de traitement de relations de dépendance de ce qu'une instruction de multiplication matrice scalaire présente une dépendance par rapport à des données sur l'instruction précédente non complétée,
l'instruction de multiplication matrice scalaire devant attendre dans une file d'attente de stockage jusqu'à ce qu'elle ne présente plus de dépendance par rapport aux données avec toute instruction précédente non complétée,
la transmission de l'instruction de multiplication matrice scalaire à l'unité d'opération matricielle après la disparition de la dépendance,
l'extraction, par l'unité d'opération matricielle, de données de la matrice requises à partir de l'unité de stockage en fonction de l'adresse et de la longueur des données requises, puis l'exécution de l'opération de multiplication matrice scalaire dans l'unité d'opération matricielle, et
l'écriture de la matrice de résultat dans une adresse spécifiée de l'unité de stockage après l'achèvement de l'opération.

21. Procédé selon la revendication 20, comprenant :
l'extraction de l'instruction de multiplication matrice scalaire par l'unité d'extraction d'instruction et la transmission de ladite instruction à une unité de décodage,
le décodage de l'instruction par l'unité de décodage et la transmission de l'instruction à une unité de file d'attente d'instructions,
dans l'unité de file d'attente d'instructions, l'acquisition par l'instruction de multiplication matrice scalaire d'un registre scalaire correspondant à quatre champs d'opération de l'instruction auprès d'un fichier de registre scalaire,
la transmission de l'instruction à l'unité de traitement de relations de dépendance lorsque les données scalaires sont acquises.

22. Procédé selon la revendication 21, dans lequel les données du registre scalaire correspondant aux quatre champs d'opération de l'instruction comprennent une adresse d'une matrice d'entrée, la taille de la matrice d'entrée, une entrée scalaire, une adresse d'une matrice de sortie.
